# EUROPEAN PATENT SPECIFICATION

(11) **EP 2 637 419 B1**
(45) Date of publication and mention of the grant of the patent: **13.07.2016**
(21) Application number: 11837698.7
(22) Date of filing: 09.09.2011
(51) Int. Cl.: H04R 3/00, H04R 17/00

(54) **ELECTRONIC DEVICE**
ELEKTRONISCHE VORRICHTUNG
DISPOSITIF ÉLECTRONIQUE

(30) Priority: 01.11.2010 JP 2010245672
(43) Date of publication of application: 11.09.2013
(73) Proprietor: NEC Corporation, Tokyo 108-8001 (JP)
(72) Inventor: KISHINAMI, Yuichiro, Kawasaki-shi, Kanagawa 211-8666 (JP); ONISHI, Yasuharu, Kawasaki-shi, Kanagawa 211-8666 (JP); KOMODA, Motoyoshi, Kawasaki-shi, Kanagawa 211-8666 (JP); MURATA, Yukio, Kawasaki-shi, Kanagawa 211-8666 (JP); KURODA, Jun, Kawasaki-shi, Kanagawa 211-8666 (JP); SATOU, Shigeo, Kawasaki-shi, Kanagawa 211-8666 (JP)
(74) Representative: Vossius & Partner Patentanwälte Rechtsanwälte mbB
(86) International application number: PCT/JP2011/005067
(87) International publication number: WO 2012/060043

(56) References cited:
- WO-A1-2005/076660
- WO-A1-2006/006294
- WO-A1-2006/077532
- JP-A- 2005 165 140
- JP-A- 2006 033 046
- JP-A- 2008 270 858
- JP-A- 2008 270 858
- JP-A- 2009 276 118
- JP-A- 2010 056 710

## Description

The present invention relates to an electronic apparatus.

As a technology using an oscillation apparatus that oscillates an ultrasonic wave, for example, there is a speaker. As a technology related to the speaker using the ultrasonic wave, for example, there are disclosures in JP 2000-23281 A, JP 2006-5552 A, and JP 2007-43585 A (Patent Documents 1 to 3, respectively). The technology disclosed in Patent Document 1 is a technology configured so that sound associated with an image displayed on the screen is realized by a reflection wave of the ultrasonic wave transmitted toward the screen.

All of the technologies disclosed in Patent Documents 2 and 3 are configured so that the ultrasonic wave is oscillated toward an image plane in a projector on which the speaker using the ultrasonic wave is mounted. The technology disclosed in the Patent Document 2 is configured so that an ultrasonic wave speaker is disposed inside an intake duct of the projector. In addition, the technology disclosed in Patent Document 3 is configured so that an audio reproduction condition can be appropriately adjusted by varying a radiation direction of the ultrasonic wave, depending on a position of the projector.

JP 2008-270858 A describes a directional sound system capable of achieving a surrounding sound effect by performing virtual sound source control in consideration of arrangments of peripheral buildings or objects.

WO 2006/077532 A1 describes an operation mode adjustment device for detecting an environment in which electronic product connected to the device is located.

As is in the Patent Documents 2 and 3, there is a technology configured so that an ultrasonic wave is oscillated toward an image plane projected by a projector and thus audio is reproduced by a reflection wave. However, an audio reproduction environment also varies depending on an image projection environment. Therefore, corresponding to the audio reproduction environment, it has been desirable not only to reproduce the audio having a suitable sound pressure but also to achieve the decreased power consumption in electronic apparatuses.

An objection of the invention is to achieve the decreased power consumption in electronic apparatuses.

According to an aspect of the invention, there is provided an electronic apparatus including: an image projection unit that projects an image plane: an oscillation device that oscillates an ultrasonic wave for sensors and an ultrasonic wave for an audio reproduction, toward the image plane: a control unit that controls the oscillation device: and a sound wave detection unit that is connected to the control unit, wherein the sound wave detection unit detects the ultrasonic wave for sensors, which is reflected from the image plane, and the control unit adjusts a sound pressure of a sound to be reproduced based on a detection strength detected by the sound wave detection unit.

According to the invention, the ultrasonic wave for sensors, which is reflected, is detected and the sound pressure is adjusted for a sound to be reproduced based on the detection strength. Therefore, corresponding to the audio reproduction environment, the sound can be reproduced by a suitable sound pressure. Accordingly, the decreased power consumption in electronic apparatuses can be achieved.

According to the invention, the decreased power consumption in electronic apparatuses can be achieved.

### BRIEF DESCRIPTION OF THE DRAWINGS

The above-described object and other object, characteristics and advantages will be further apparent from preferred embodiments described below and the accompanying drawings as follows:

FIG. 1 is a schematic view illustrating an operation method of an electronic apparatus according to a first embodiment.
FIG. 2 is a block diagram illustrating a configuration of the electronic apparatus illustrated in FIG. 1.
FIG. 3 is a cross-sectional view illustrating an oscillation device illustrated in FIG. 1.
FIG. 4 is a cross-sectional view illustrating a piezoelectric vibrator illustrated in FIG. 3.
FIG. 5 is a flow chart illustrating an operation method of the electronic apparatus illustrated in FIG. 1.
FIG. 6 is an exploded perspective view illustrating a vibrator of an oscillation device configuring an electronic apparatus according to a second embodiment.

### DESCRIPTION OF EMBODIMENTS

Hereinafter, embodiments of the invention will be described with reference to the drawings accompanying herewith. In addition, in all of the drawings, similar reference numerals are given to similar configuration elements and the description thereof will not be repeated.

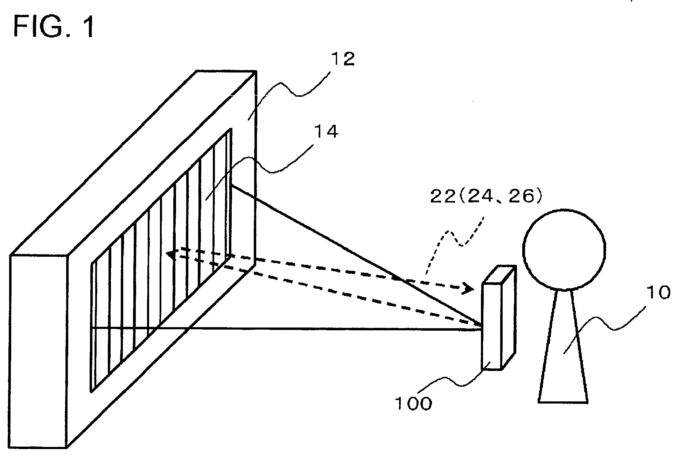

FIG. 1 is a schematic view illustrating an operation method off an electronic apparatus 100 according to a first embodiment. The electronic apparatus 100 according to the embodiment includes an image projection unit 40, an oscillation device 20, an audio control unit 52 and a sound wave detection unit 30. The electronic apparatus 100 is, for example, a mobile terminal apparatus and more specifically, for example, a mobile phone.

The image projection unit 40 projects images. The oscillation device 20 emits an ultrasonic wave 22 toward an image plane. The ultrasonic wave 22 includes an ultrasonic wave 24 for sensors and an ultrasonic wave 26 for audio reproduction. The audio control unit 52 controls the oscillation device 20. The sound wave detection unit 30 is connected to the audio control unit 52. The sound wave detection unit 30 detects the ultrasonic wave 24 for sensors, which is reflected from the image plane. The audio control unit 52 adjusts a sound pressure of a sound to be reproduced based on detection strength detected by the sound wave detection unit 30. Hereinafter, a detailed description with regard to a configuration of the electronic apparatus 100 will be given.

As illustrated in FIG. 1, the image plane is projected from the electronic apparatus 100 toward a display area 12. Then, the ultrasonic wave 22 is oscillated from the electronic apparatus 100 toward the image plane 14 projected on the display area 12. The display area 12 may be, for example, a wall in a room, a projector screen or the like, but is not limited thereto. The ultrasonic wave 24 for sensors oscillated from the electronic apparatus 100 is reflected by the display area 12 and then detected by the sound wave detection unit 30 of the electronic apparatus 100. In addition, the ultrasonic wave 26 for audio reproduction oscillated from the electronic apparatus 100 is reflected by the display area 12 to form a sound field around a user 10. As a result, the sound is reproduced from the image plane 14 toward the user 10. Therefore, an acoustic function having a sense of realism can be realized.

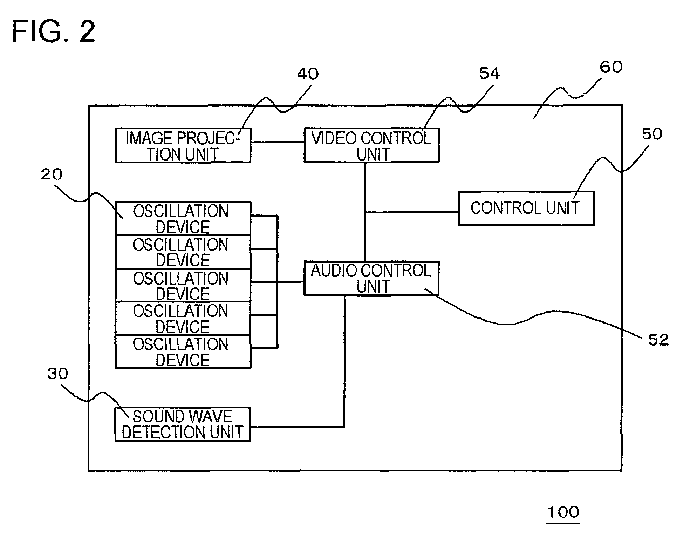

FIG. 2 is a block diagram illustrating a configuration of the electronic apparatus 100 illustrated in FIG. 1. As illustrated in FIG. 2, the electronic apparatus 100 further includes a housing 60, a control unit 50 and a video control unit 54. The image projection unit 40, the oscillation device 20, the sound wave detection unit 30, the audio control unit 52, the video control unit 54 and the control unit 50 are formed, for example, inside the housing 60. In the housing 60, a hole through which the ultrasonic wave 22 oscillated from the oscillation device 20 passes and the other hole through which light projected from the image projection unit 40 passes are installed. The video control unit 54 controls the image projection unit 40. The control unit 50 is connected to both of the audio control unit 52 and the video control unit 54 to control them. The oscillation device 20 is installed in plural number in an array shape, for example. The oscillation device 20 that oscillates the ultrasonic wave 24 for sensors may be different from the oscillation device 20 that oscillates the ultrasonic wave 26 for audio reproduction or may be the same each other.

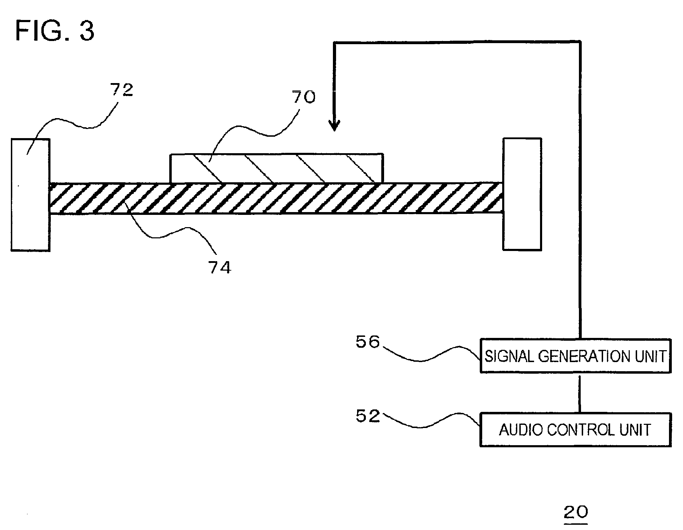

FIG. 3 is a cross-sectional view illustrating the oscillation device 20 illustrated in FIG. 1. The oscillation device 20 includes a piezoelectric vibrator 70, a support member 72 and a vibration member 74. The piezoelectric vibrator 70 is installed on one surface of the vibration member 74. The support member 72 supports an edge of the vibration member 74.

The audio control unit 52 is connected to the piezoelectric vibrator 70 via a signal generation unit 56. The signal generation unit 56 generates an electric signal which is input to the piezoelectric vibrator 70. The audio control unit 52 controls the signal generation unit 56 based on information input from the outside and thereby controls the oscillation of the oscillation device. In a case where the oscillation device 20 is used as the speaker, the audio control unit 52 inputs a modulation signal as a parametric speaker via the signal generation unit 56. In this case, the piezoelectric vibrator 70 uses a sound wave which is equal to or more than 20 KHz, for example, 100 KHz, as a signal of the carrier wave of the signal. In addition, in a case where the oscillation device 20 is used as a sound wave sensor, the signal input to the audio control unit 52 is a command signal which commands the oscillation device 20 to oscillate the sound wave. Then, in a case where the oscillation device 20 is used as the sound wave sensor, the signal generation unit 56 causes the piezoelectric vibrator 70 to generate a sound wave of a resonance frequency of the piezoelectric vibrator 70.

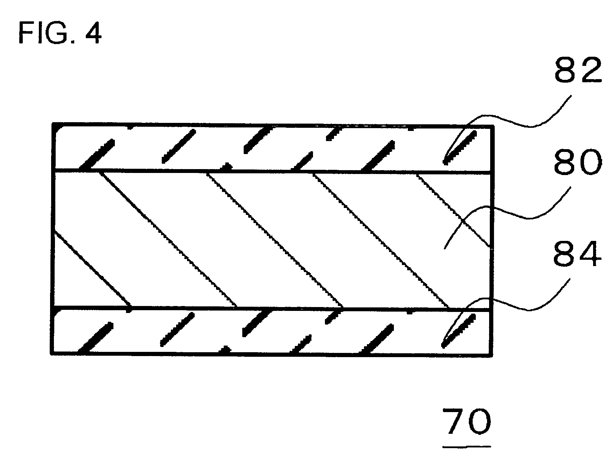

FIG. 4 is a cross-sectional view illustrating the piezoelectric vibrator 70 illustrated in FIG. 3. As illustrated in FIG. 4, the piezoelectric vibrator 70 is formed of a piezoelectric body 80, an upper electrode 82 and a lower electrode 84. In addition, the piezoelectric vibrator 70 has, for example, a circular or oval shape when seen in a plan view. The piezoelectric body 80 is interposed between the upper electrode 82 and the lower electrode 84. In addition, the piezoelectric body 80 polarizes in the thickness direction. The piezoelectric body 80 is configured by a material having high piezoelectric effect. For example, the piezoelectric body 80 is configured by a material with high electromechanical conversion efficiency such as a lead zirconate titanate (PZT) or a barium titanate (BaTiO₃). In addition, the thickness of the piezoelectric body 80 is preferably 10 µm to 1mm. The piezoelectric body 80 is configured by a brittle material. Therefore, in a case where the thickness is less than 10 micrometers, damage is likely to occur during the handling. On the other hand, in a case where the thickness exceeds 1 mm, an electric field strength of the piezoelectric body 80 is decreased. Accordingly, energy conversion efficiency in the piezoelectric vibrator 70 results in degradation.

The upper electrode 82 and the lower electrode 84 are configured by a material having an electric conductivity. The upper electrode 82 and the lower electrode 84 are configured by silver or an alloy of silver and palladium, for example. The silver is a general use material having a low resistivity. Therefore, when the upper electrode 82 and the lower electrode 84 are configured by the silver, a superior electrode in view of the manufacturing cost and manufacturing process can be realized. In addition, the alloy of silver and palladium is a low resistance material having an excellent resistance to oxidation. Therefore, when the upper electrode 82 and the lower electrode 84 are configured by the alloy of silver and palladium, a highly reliable electrode can be realized.

The thickness of the upper electrode 82 and the lower electrode 84 is preferably 1 to 50µm. If the thickness is less than 1µm, it is difficult to uniformly mold the upper electrode 82 and the lower electrode 84. On the other hand, if the thickness exceeds 50µm, the upper electrode 82 or the lower electrode 84 become a restraint surface with respect to the piezoelectric body 80. Therefore, the degradation of the energy conversion efficiency is occurred in the piezoelectric vibrator 70.

The vibration member 74 is configured by a material having high elastic modulus such as a metal or a resin compared to a ceramic which is the brittle material. The vibration member 74 is configured by a general purpose material such as phosphor bronze or stainless, for example. The thickness of the vibration member 74 is preferably 5 to 500µm. In addition, the vertical elastic modulus of the vibration member 74 is preferably 1 to 500GPa. In a case where the vertical elastic modulus of the vibration member 74 is excessively low or high, properties or reliability as the mechanical vibrator is likely to be impaired.

The sound wave detection unit 30 determines that the ultrasonic wave 24 for sensors is detected, for example, when it is verified that a frequency of the detected sound wave is a frequency within a certain range and the strength of the detected sound wave is equal to or more than a reference value. Thereby, a noise from an ambient environment and the ultrasonic wave 24 for sensors can be distinguished from each other. When the electronic apparatus 100 is a mobile phone, the sound wave detection unit 30 can be configured by a microphone, for example.

The audio control unit 52 adjusts the sound pressure of the reproduced sound to be lower, for example, when the strength of the reflected ultrasonic wave 24 for sensors from the display area 12 is high. In addition, for example, when the strength of the ultrasonic wave 24 for sensors, which is reflected from the display area 12, is low, the sound pressure of the reproducing sound is adjusted to be higher. The adjustment is performed based on, for example, a relational expression or table indicating a predetermined correlation between a detection strength and a reproducing sound pressure. The audio control unit 52 holds, for example, the data of these relational expression and table in advance.

In the present embodiment, the sound reproduction is performed using an operation principle of the parametric speaker. The operation principle of the parametric speaker is as follows. The operation principle of the parametric speaker is to perform the sound reproduction using such a principle that the audible sound is present by nonlinear characteristics when the ultrasonic wave subjected to an AM modulation, a DSB modulation, a SSB modulation and an FM modulation is emitted in the air and then the emitted ultrasonic wave is propagated in the air. Here, so called non-linear characteristics indicate a transition from a layer flow to a turbulent flow when Reynolds number represented by a ratio between inertial effects and viscous effects is increased. That is, since the sound wave is slightly disturbed inside a fluid, the sound wave is propagated in a non-linear manner. Particularly, when the ultrasonic wave is emitted in the air, a harmonic wave is remarkably generated due to the non-linear manner. In addition, the sound wave is in a sparse and dense state in which molecular groups are sparsely and densely mixed in the air. If it takes more time to restore the air molecule than to compress it, the air which is not restored after being compressed collides with the continuously propagated air and thereby a shock wave is generated. As a result, the audible sound is generated. Since the parametric speaker can form the sound field only around the user, the parametric speaker is excellent in a viewpoint of privacy protection.

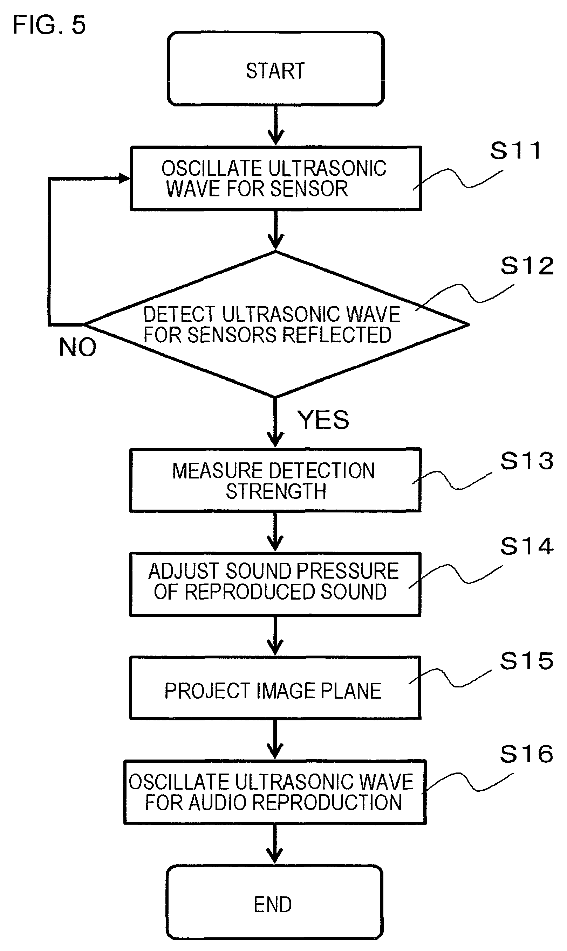

Next, an operation method of the electronic apparatus 100 will be described. FIG. 5 is a flow chart illustrating the operation method of the electronic apparatus 100 illustrated in FIG. 1. First, the ultrasonic wave 24 for sensors is oscillated from the oscillation device 20 toward the display area 12 (S11). Then, the ultrasonic wave 24 for sensors reflected from the display area 12 is detected by the sound wave detection unit 30 (S12). If the ultrasonic wave 24 for sensors is detected, the detection strength thereof is measured (S13). If the detection strength is high, the sound pressure of the reproducing sound is adjusted to be lower. In addition, if the detection strength is low, the sound pressure of the reproducing sound is adjusted to be higher (S14). Such adjustment is performed based on, for example, a predetermined correlation between the detection strength and the reproducing sound pressure. Next, the image plane 14 is projected on the display area 12 by the image projection unit 40 (S15). Then, the ultrasonic wave 26 for audio reproduction is oscillated (S16).

Next, effects of the present embodiment will be described. According to the electronic apparatus 100 of the present embodiment, the sound pressure of the reproducing sound is adjusted based on the detection strength after detection of the reflected ultrasonic wave 24 for sensors. Therefore, the electronic apparatus 100 can represent the sound with an appropriate sound pressure in response to various environments representing the sound, such as materials of the display area 12 which causes the ultrasonic wave 26 for audio reproduction to be reflected, a distance between the user 10 and the display area 12, and the like. Therefore, decreased power consumption in the electronic apparatuses can be achieved.

In addition, in a case where the electronic apparatus 100 is a mobile terminal device, the environment projecting the image is varies. Thus, the effects described above become particularly noticeable.

In addition, according to the electronic apparatus 100 of the present embodiment, the sound image is formed by the ultrasonic wave 26 for audio reproduction which is reflected from the image plane 14. Therefore, the user 10 has a feeling such that the sound is reproduced from the image plane 14. Thus, it is possible to form a sound image with a sense of realism.

In addition, the oscillation device 20 configures the parametric speaker. Therefore, the sound field can be formed only around the user 10. Thus, a superior electronic apparatus can be realized in the view point of privacy protection.

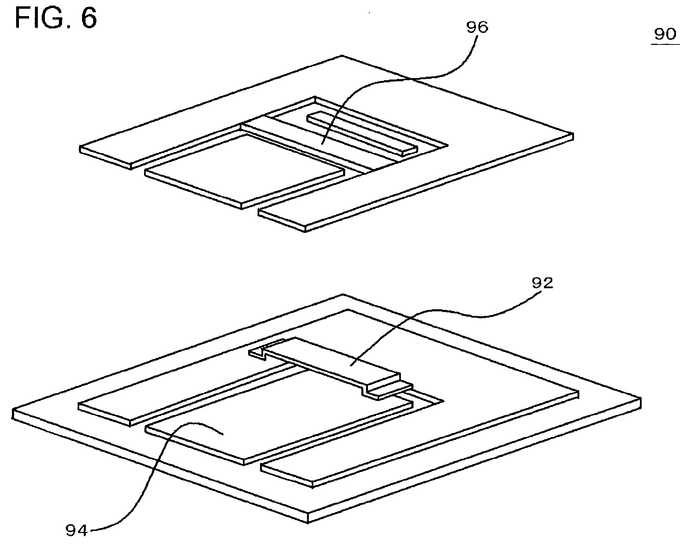

FIG. 6 is an exploded perspective view illustrating a vibrator of the oscillation device 20 configuring an electronic apparatus according to a second embodiment. The vibrator of the oscillation device 20 according to the second embodiment is configured by a MEMS actuator 90. Except for such a point, the electronic apparatus according to the present embodiment is the same as the electronic apparatus according to the first embodiment.

In the example illustrated in FIG. 6, a driving method of the MEMS actuator 90 is a piezoelectric method and has a structure in which a piezoelectric thin film layer 92 is interposed between an upper movable electrode 94 and a lower movable electrode 96. The MEMS actuator 90 is operated by inputting a signal from the signal generation unit 56 to an upper movable electrode layer 94 and a lower movable electrode layer 96. For example, an aerosol deposition method is used when manufacturing the MEMS actuator 90, but the manufacturing method is not limited thereto. However, if the aerosol deposition method is used, it is preferable because the piezoelectric thin film layer 92, the upper movable electrode layer 94 and the lower movable electrode layer 96 can be respectively deposited on a curved surface as well. In addition, the driving method of the MEMS actuator 90 may be an electrostatic method, an electromagnetic method or a heat conduction method.

Hitherto, the embodiments according to the present invention have been described with reference to the accompanying drawings, but those are examples of the invention and it is possible to employ various configurations other than the above-described configuration.

## Claims

1. A mobile terminal apparatus comprising:
an image projection unit (40) that projects an image plane (14);
an oscillation device (20) that oscillates an ultrasonic wave (24) for sensors and an ultrasonic wave (26) for an audio reproduction toward the image plane;
a control unit (50) that controls the oscillation device: and
a sound wave detection unit (30) that is connected to the control unit (50),
wherein the sound wave detection unit (30) detects the ultrasonic wave (24) for sensors, which is reflected from the image plane, when it is verified that a frequency of said detected sound wave for sensors is a frequency within a certain range and the strength of said detected sound wave for sensors is equal to or more than a reference value, and
the control unit (50) adjusts a sound pressure of a sound to be reproduced based on a detection strength detected by the sound wave detection unit (30),
wherein the control unit (50) adjusts the sound pressure to be reproduced so as to decrease the sound pressure when the detection strength detected by the sound wave detection unit (30) is higher than the reference value, and to increase the sound pressure when the detection strength detected by the sound wave detection unit (30) is lower than the reference value.

2. The mobile terminal apparatus according to claim 1,
wherein the oscillation device has a piezoelectric vibrator as a vibrator.

3. The mobile terminal apparatus according to claim 1,
wherein the oscillation device has an MEMS as a vibrator, whose driving method is a piezoelectric method, an electrostatic method, an electromagnetic method or a heat conduction method.

## Patentansprüche

1. Mobiles Endgerät, das aufweist:
eine Bildprojektionseinheit (40), die eine Bildebene (14) projiziert;
eine Oszillationsvorrichtung (20), die eine Ultraschallwelle (24) für Sensoren und eine Ultraschallwelle (26) für eine Audiowiedergabe zur Bildebene oszilliert;
eine Steuereinheit (50), die die Oszillationsvorrichtung steuert; und
eine Schallwellendetektionseinheit (30), die mit der Steuereinheit (50) verbunden ist,
wobei die Schallwellendetektionseinheit (30) die Ultraschallwelle (24) für Sensoren detektiert, die von der Bildebene reflektiert wird, wenn verifiziert wird, dass eine Frequenz der detektierten Schallwelle für Sensoren eine Frequenz innerhalb eines bestimmten Bereichs ist und die Stärke der detektierten Schallwelle für Sensoren gleich oder größer als ein Referenzwert ist, und
die Steuereinheit (50) einen Schalldruck eines wiederzugebenen Schalls beruhend auf einer Detektionsstärke einstellt, die durch die Schallwellendetektionseinheit (30) detektiert wird,
wobei die Steuereinheit (50) den wiederzugebenen Schalldruck so einstellt, dass der Schalldruck gesenkt wird, wenn die durch die Schallwellendetektionseinheit (30) detektierte Detektionsstärke höher als der Referenzwert ist, und der Schalldruck erhöht wird, wenn die durch die Schallwellendetektionseinheit (30) detektierte Detektionsstärke niedriger als der Referenzwert ist.

2. Mobiles Endgerät nach Anspruch 1, wobei die Oszillationsvorrichtung einen piezoelektrischen Schwingungserzeuger als Schwingungserzeuger aufweist.

3. Mobiles Endgerät nach Anspruch 1,
wobei die Oszillationsvorrichtung ein MEMS als einen Schwingungserzeuger aufweist, dessen Antriebsverfahren ein piezoelektrisches Verfahren, ein elektrostatisches Verfahren, ein elektromagnetisches Verfahren oder ein Wärmeleitungsverfahren ist.

## Revendications

1. Dispositif terminal mobile, comprenant :
une unité de projection vidéo (40) projetant un écran (14) ;
un dispositif d'oscillation (20) générant une oscillation d'onde ultrasonique (24) pour des capteurs et une onde ultrasonique (26) pour une reproduction audio vers l'écran ;
une unité de commande (50) commandant le dispositif d'oscillation ; et
une unité de détection d'ondes sonores (30) reliée à l'unité de commande (50),
où l'unité de détection d'ondes sonores (30) détecte l'onde ultrasonique (24) pour capteurs réfléchie par l'écran, s'il est vérifié qu'une fréquence de l'onde sonore détectée pour capteurs est une fréquence comprise dans une plage définie et que l'intensité de l'onde sonore détectée pour capteurs est égale ou supérieure à une valeur de référence, et où
l'unité de commande (50) règle la pression acoustique d'un son à reproduire sur la base d'une intensité de détection, détectée par l'unité de détection d'ondes sonores (30),
l'unité de commande (50) règle la pression acoustique à reproduire de manière à réduire la pression acoustique si l'intensité de détection détectée par l'unité de détection d'ondes sonores (30) est supérieure à la valeur de référence, et à élever la pression acoustique si l'intensité de détection détectée par l'unité de détection d'ondes sonores (30) est inférieure à la valeur de référence.

2. Dispositif terminal mobile selon la revendication 1, où le dispositif d'oscillation comporte un vibrateur piézoélectrique en tant que vibrateur.

3. Dispositif terminal mobile selon la revendication 1,
où le dispositif d'oscillation comporte un oscillateur MEMS en tant que vibrateur, dont le principe d'entraînement est un principe piézoélectrique, un principe électrostatique, un principe électromagnétique ou un principe thermoconducteur.
